Europäisches Patentamt

European Patent Office

Office européen des brevets

(19)

(11) Numéro de publication : **0 465 352 B1**

(12)

# FASCICULE DE BREVET EUROPEEN

(45) Date de publication du fascicule du brevet :
**19.10.94 Bulletin 94/42**

(51) Int. Cl.⁵ : **G05D 1/06, B64C 19/02**

(21) Numéro de dépôt : **91401824.7**

(22) Date de dépôt : **03.07.91**

(54) **Système pour la commande intégrée en profondeur et en poussée d'un aéronef.**

(30) Priorité : **04.07.90 FR 9008479**

(43) Date de publication de la demande :
**08.01.92 Bulletin 92/02**

(45) Mention de la délivrance du brevet :
**19.10.94 Bulletin 94/42**

(84) Etats contractants désignés :
**DE GB IT NL**

(56) Documents cités :
**EP-A- 0 296 951
FR-A- 2 245 999
US-A- 3 512 737
US-A- 4 266 743
JOURNAL OF GUIDANCE AND CONTROL AND
DYNAMICS vol. 9, no. 6, Novembre 1986, NEW
YORK , US, pages 614 - 619; R.A. HESS ET AL.:
'CROSS COUPLING IN PILOT-VEHICLE SYS-
TEMS '**

(73) Titulaire : **AEROSPATIALE SOCIETE
NATIONALE INDUSTRIELLE Société
Anonyme dite:
37, Boulevard de Montmorency
F-75016 Paris (FR)**

(72) Inventeur : **Farineau, Jacques
45, rue Saint Roch
F-31400 Toulouse (FR)**
Inventeur : **Larramendy, Panxika
86, rue de la Concorde
F-31400 Toulouse (FR)**

(74) Mandataire : **Bonnetat, Christian
CABINET BONNETAT
23, Rue de St.Pétersbourg
F-75008 Paris (FR)**

## Description

La présente invention a pour objet un système pour la commande intégrée en profondeur et en poussée d'un aéronef.

On sait que, actuellement, il existe à bord des aéronefs, d'une part un système de commande en profondeur contrôlé par le manche à la disposition du pilote et agissant sur les gouvernes de profondeur et/ou l'éventuel empennage horizontal réglable de l'aéronef, et, d'autre part, un système de commande de poussée destiné à commander la vitesse de l'aéronef, ce système de commande de poussée étant contrôlé par une manette des gaz, manuelle ou automatique, et agissant sur le ou les moteurs de l'aéronef.

Ainsi, lorsque le pilote désire faire varier l'assiette longitudinale de l'aéronef, il déplace en conséquence le manche du système de commande en profondeur, de sorte que les gouvernes de profondeur et/ou l'empennage horizontal réglable sont braqués dans le sens désiré. Toutefois, une telle variation d'assiette entraîne une variation de vitesse de l'aéronef : en effet, si l'avion se cabre, sa vitesse diminue, alors que s'il pique, sa vitesse augmente. Il en résulte que, à la suite de son intervention sur le système de commande en profondeur, le pilote doit agir sur le système de commande en poussée pour ramener la vitesse de l'aéronef à la valeur désirée.

Inversement, lorsque le pilote faire désire varier la vitesse de l'aéronef, il actionne la manette des gaz du système de commande de poussée des moteurs. Cependant, une telle variation de vitesse commandée induit un mouvement de tangage, de sorte que le pilote, à la suite de son intervention sur le système de commande de vitesse, doit agir sur le système de commande en profondeur pour ramener l'aéronef à l'assiette désirée, si on veut maîtriser le mouvement longitudinal dudit aéronef.

On voit donc qu'une variation d'assiette ou une variation de vitesse commandées oblige le pilote à agir sur les deux systèmes de commande en profondeur et en vitesse.

Le document FR-A- 2 245 999 divulgue une installation pour le guidage automatique d'avions le long d'une trajectoire de vol non rectiligne par l'intermédiaire d'un gouvernail de profondeur et d'un groupe propulseur, au moyen d'un organe de positionnement de gouvernail de profondeur et d'un organe de réglage du groupe propulseur commandant la poussée, avec un palpeur d'altitude et un palpeur pour l'état d'écoulement aérodynamique, un indicateur de trajectoire de vol pour la production d'une grandeur de guidage d'altitude, un indicateur de valeur de consigne pour la production d'une grandeur de guidage pour l'état d'écoulement aérodynamique, un premier comparateur pour la production d'un premier signal d'écart de règlage en fonction de l'indication de mesure de l'écart entre l'altitude réelle mesurée par le palpeur d'altitude et la grandeur de guidage d'altitude, un second comparateur étant prévu pour produire un second signal d'écart de réglage en fonction de l'écart entre l'état d'écoulement aérodynamique mesuré par le palpeur et la grandeur de guidage délivrée par l'indicateur de valeur de consigne, de telle sorte que l'organe de positionnement du gouvernail de profondeur est commandé en dépendance au moins du premier signal d'écart de réglage et l'organe de réglage du moteur de propulsion est commandé en dépendance au moins du second signal d'écart de réglage.

On connaît aussi par le document US-A-4 266 743 un système de stabilisation en profondeur d'un aéronef utilisant un signal de taux de compression du moteur pour amortir les moments d'inertie en profondeur dus à une variation de la poussée commandée.

La présente invention a pour objet de remédier à cet inconvénient. Elle permet de diminuer la charge de travail du pilote, tout en apportant une plus grande sécurité et en améliorant le confort des passagers de l'aéronef.

A cette fin, selon l'invention, le système de commande en profondeur et en poussée d'un aéronef comportant :

- des premières surfaces aérodynamiques de profondeur actionnées à partir d'un premier organe d'actionnement associé à un premier transducteur délivrant un premier signal électrique représentatif d'un paramètre longitudinal commandé, tel que l'assiette, la pente ou le facteur de charge vertical ;
- au moins un moteur commandé à partir d'un second organe d'actionnement associé à un second transducteur délivrant un second signal électrique représentatif d'une vitesse commandée pour ledit aéronef ;
- une pluralité de secondes surfaces aérodynamiques pouvant prendre, en fonction de chaque phase de vol de l'aéronef, des positions relatives différentes définissant des configurations aérodynamiques particulières, le choix de l'une ou l'autre desdites configurations aérodynamiques étant obtenu grâce à l'actionnement d'un troisième organe d'actionnement associé à un troisième transducteur délivrant un troisième signal électrique représentatif de la configuration choisie ;
- des moyens susceptibles de délivrer un quatrième signal électrique représentatif de la masse dudit aéronef ;
- des moyens susceptibles de délivrer un cinquième signal électrique représentatif de la distance, le long de l'axe longitudinal dudit aéronef, séparant le centre de gravité dudit aéronef d'une origine ; et

- des moyens susceptibles de délivrer des sixième, septième, huitième, neuvième et dixième signaux électriques, respectivement représentatifs de l'altitude de vol, de l'incidence aérodynamique, de la vitesse de tangage, de l'assiette longitudinale et de la vitesse instantanées dudit aéronef,

est remarquable en ce qu'il comporte :

- un premier dispositif de calcul recevant lesdits premier à sixième signaux électriques, ainsi que ledit dixième signal électrique et élaborant une première et une seconde combinaison linéaire desdits premier et second signaux électriques, les coefficients attribués respectivement auxdits premier et second signaux électriques dans ladite première et ladite seconde combinaison linéaire dépendant desdits troisième à sixième et dixième signaux électriques ;

- un second dispositif de calcul recevant lesdits troisième à dixième signaux électriques et élaborant une troisième et une quatrième combinaison linéaire desdits septième à dixième signaux électriques, les coefficients attribués respectivement auxdits septième à dixième signaux électriques dans ladite troisième et ladite quatrième combinaison linéaire dépendant desdits troisième à sixième et dixième signaux électriques ;

- des premiers moyens additionneurs recevant lesdites première et troisième combinaisons linéaires et les additionnant pour former un premier ordre électrique de commande en profondeur adressé auxdites premières surfaces aérodynamiques ; et

- des seconds moyens additionneurs recevant lesdites seconde et quatrième combinaisons linéaires et les additionnant pour former un second ordre électrique de commande en poussée adressé audit moteur.

On voit donc que, selon l'invention, chacun des ordres de commande en profondeur et en poussée est une combinaison linéaire comportant des paramètres statiques (le paramètre longitudinal commandé tel que l'assiette, et la vitesse commandée) et des paramètres dynamiques (l'incidence, la vitesse de tangage, l'assiette longitudinale et la vitesse instantanées). Ainsi :

- une variation volontaire de l'assiette commandée, par exemple, peut entraîner automatiquement le maintien de la vitesse commandée à la valeur précédant la variation d'assiette, puisque l'assiette commandée intervient dans l'ordre de commande des moteurs ;

- une variation volontaire de la vitesse commandée peut entraîner automatiquement le maintien de l'assiette longitudinale à la valeur précédant la variation de vitesse, puisque la vitesse commandée intervient dans l'ordre de commande en profondeur ;

- les dynamiques des variations volontaires d'assiette et de vitesse commandées sont réglées par les retours en incidence, en vitesse de tangage, en assiette et/ou en vitesse calculés par ledit second dispositif de calcul et appliqués auxdites première et seconde combinaisons linéaires ;

- les rafales de vent, aussi bien horizontales que verticales, sont prises en compte par le système, puisque ces rafales de vent engendrent des variations de vitesse aérodynamique et/ou d'incidence et que ces deux paramètres sont présents dans l'ordre de commande en profondeur et dans l'ordre de commande en poussée. Il en résulte que le système conforme à l'invention peut, lors de rafales de vent, maintenir l'assiette et la vitesse à leurs valeurs commandées, de sorte que le confort des passagers est assuré.

Chacun des ordres de commande en profondeur et de commande en poussée étant la combinaison linéaire de six paramètres (le paramètre longitudinal commandé, la vitesse commandée, l'incidence, la vitesse de tangage, l'assiette et la vitesse instantanées), l'influence de chacun de ces six paramètres dans chaque ordre de commande est réglée par la valeur et le signe du coefficient qui est affecté à chaque paramètre. Aussi, chacun des douze paramètres (six pour l'ordre de commande en profondeur, six pour l'ordre de commande en poussée) est-il déterminé par le calcul en fonction de l'influence désirée pour le paramètre correspondant dans chacun desdits ordres. Cependant, l'influence désirée de chacun desdits paramètres dans chacun des deux ordres doit être variable en fonction de la masse de l'aéronef (avion gros porteur, avion de chasse, etc ...), du centrage de l'aéronef, de la configuration prise par ses différentes surfaces aérodynamiques (volets, becs, déflecteurs, etc ..., sortis ou rentrés en fonction des phases de vol différentes) et de l'altitude de vol (qui détermine l'efficacité des surfaces aérodynamiques et des moteurs). C'est pour cela que lesdits coefficients sont sous la dépendance desdits troisième à sixième signaux et dudit dixième signal.

Selon une particularité importante de la présente invention, ledit premier dispositif de calcul comporte une première mémoire contenant une pluralité d'ensembles de quatre coefficients pour lesdites première et seconde combinaisons linéaires, le choix d'un tel ensemble de quatre coefficients parmi les autres dépendant desdits troisième à sixième et dixième signaux électriques. De même, selon une autre particularité importante de la présente invention, ledit second dispositif de calcul comporte une seconde mémoire contenant une pluralité d'ensembles de huit coefficients pour lesdites troisième et quatrième combinaisons linéaires, le choix d'un tel ensemble de huit coefficients parmi les autres dépendant desdits troisième à sixième et dixième signaux électriques.

De préférence, le système selon l'invention comporte de plus :

- des moyens pour former et intégrer la différence entre lesdits second et dixième signaux électriques ;
- des premiers moyens amplificateurs pour amplifier ladite différence intégrée provenant desdits moyens de soustraction et d'intégration, le gain desdits premiers moyens amplificateurs étant une fonction desdits troisième à sixième et dixième signaux électriques ;
- des troisièmes moyens additionneurs pour additionner audit premier ordre électrique de commande en profondeur ladite différence intégrée et amplifiée provenant desdits premiers moyens amplificateurs ;
- des seconds moyens amplificateurs pour amplifier ladite différence intégrée provenant desdits moyens de soustraction et d'intégration, le gain desdits seconds moyens amplificateurs étant une fonction desdits troisième à sixième et dixième signaux électriques ; et
- des quatrièmes moyens additionneurs pour additionner audit second ordre électrique de commande en poussée ladite différence intégrée et amplifiée provenant desdits seconds moyens amplificateurs.

Ainsi, il est possible de remédier à une éventuelle erreur statique entre la vitesse commandée apparaissant à la sortie dudit second transducteur et la vitesse réellement atteinte par l'aéronef en régime stabilisé.

Afin d'éviter l'inconvénient dû à la lenteur de réaction relative de tels moyens d'intégration, on prévoit un filtre de fonction $1/1 + \tau p$ à travers lequel ledit second signal électrique est appliqué auxdits moyens de soustraction et d'intégration. Ainsi, les moyens de soustraction et d'intégration interviennent peu en cas de faible erreur entre ladite vitesse commandée et la vitesse du régime stabilisé de l'aéronef et ils n'apportent qu'une contribution partielle à l'atteinte de la vitesse commandée par ladite vitesse de régime stabilisée.

Dans le cas d'un aéronef dans lequel lesdites premières surfaces aérodynamiques de profondeur comportent des gouvernes de profondeur et un plan horizontal réglable, il est avantageux que le système conforme à la présente invention comporte un dispositif répartissant ledit premier ordre électrique de commande en profondeur entre lesdites gouvernes de profondeur d'une part, et ledit plan horizontal réglable, d'autre part.

Ainsi, il est possible de profiter des propriétés intrinsèques desdites gouvernes de profondeur et dudit plan horizontal, en évitant leurs inconvénients spécifiques. On sait en effet que les gouvernes de profondeur ont des temps de réponse très courts permettant d'atteindre rapidement la profondeur désirée, mais qu'elles ne peuvent être utilisées en permanence pour conserver une maniabilité de chaque côté. En revanche, le plan horizontal réglable présente des temps de réponse élevés, mais il est plus efficace.

Les figures du dessin annexé feront bien comprendre comment l'invention peut être réalisée. Sur ces figures, des références identiques désignent des éléments semblables.

La figure 1 montre, en perspective du dessus, un avion civil gros porteur mettant en application le système de commande en profondeur et en poussée selon l'invention.

La figure 2 représente le schéma synoptique du système de commande en profondeur et en poussée, conforme à l'invention.

La figure 3 illustre, en schéma synoptique, un perfectionnement du système de commande selon l'invention, permettant de supprimer l'erreur statique de vitesse.

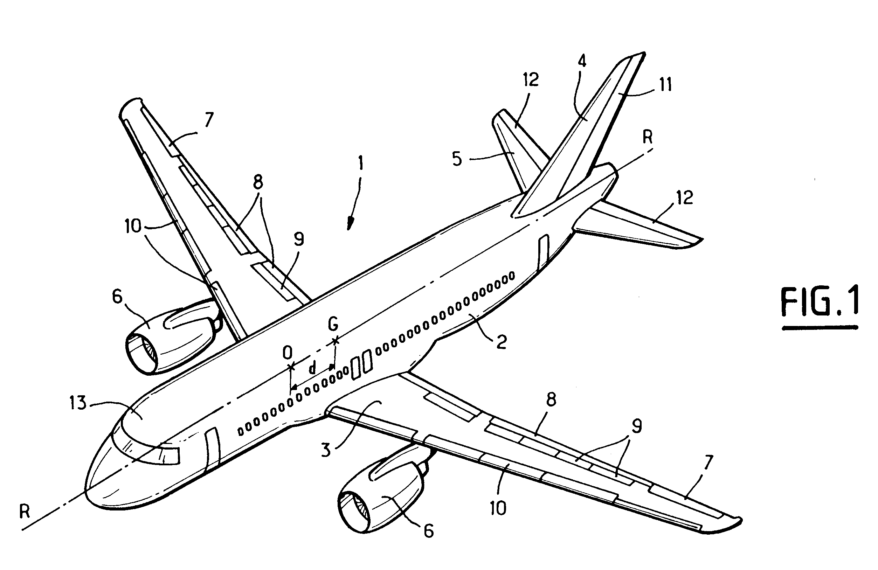

L'avion civil gros porteur 1, montré en perspective sur la figure 1, comporte un fuselage 2, des ailes 3, un empennage vertical 4 et un empennage horizontal 5. Il est propulsé par deux moteurs 6, accrochés sous les ailes 3.

Sur l'extrados des ailes 3 sont prévus des ailerons 7 de bord de fuite, des volets 8, des déflecteurs 9 et des becs 10 de bord d'attaque. De façon connue, certains des déflecteurs 9 sont utilisables comme aérofreins, d'autres comme déflecteurs de roulis en combinaison avec les ailerons 7 ; par ailleurs, ces déflecteurs 9 peuvent être utilisés comme volets déporteurs et, éventuellement en coopération avec les ailerons 7, ils peuvent exercer une fonction d'allègement de charge pour abaisser les efforts de flexion appliqués auxdites ailes 3.

Sur l'empennage vertical 4 est prévue une gouverne de direction 11, tandis que des gouvernes de profondeur 12 sont articulées sur le bord de fuite de l'empennage horizontal 5. Cet empennage 5 peut lui-même être mobile pour former un plan ou stabilisateur horizontal réglable susceptible d'être utilisé pour commander la profondeur de l'avion 1.

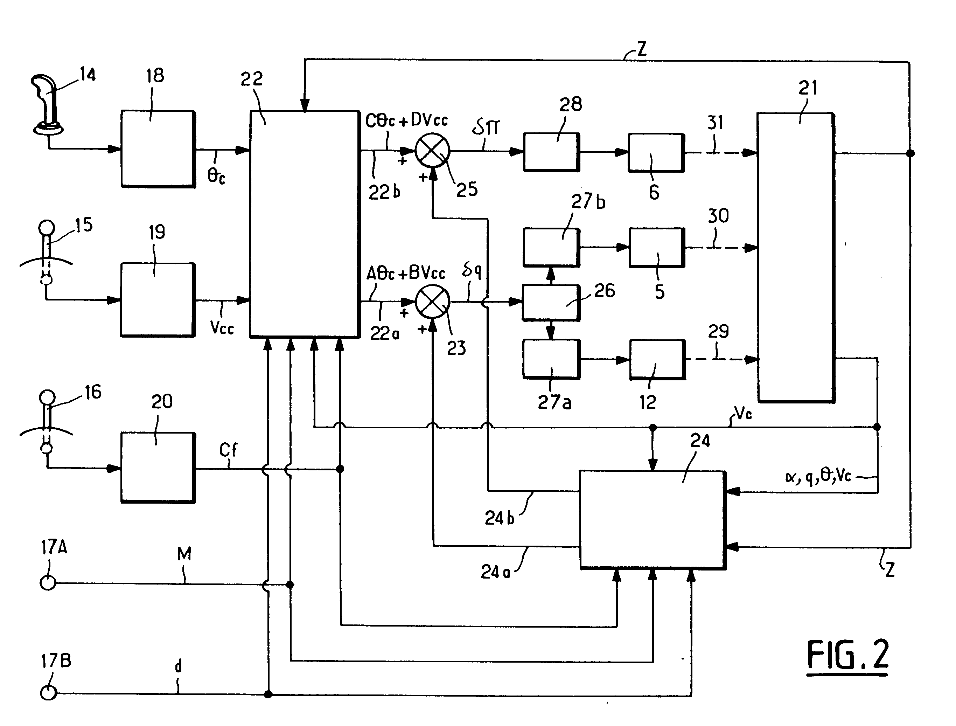

Pour commander la profondeur de l'avion 1, il est prévu dans le poste de pilotage 13 de celui-ci, au moins un manche 14, à la disposition d'un pilote (voir la figure 2). Le manche 14 commande les gouvernes de profondeur 12 et, éventuellement, l'empennage horizontal 5.

De plus, pour commander la poussée des moteurs 6, une manette des gaz 15 est disposée dans le poste de pilotage 13.

La présente invention ne concerne que la commande des gouvernes de profondeur 12 (et éventuellement de l'empennage horizontal 5) et celle des moteurs 6, de sorte que les commandes des ailerons 7, des volets 8, des déflecteurs 9 et des becs 10 ne seront pas décrites. Il est simplement rappelé que, de façon connue, en fonction de la phase de vol (vol de croisière, atterrissage, décollage, ...), lesdites surfaces aérodynamiques 7 à 10 sont soit sorties, soit rentrées et qu'à chaque phase de vol correspond une configuration particulière pour laquelle certaines desdites surfaces aérodynamiques 7 à 10 sont sorties et d'autres rentrées. Chacune

EP 0 465 352 B1

desdites configurations est choisie par le pilote à l'aide d'un organe de sélection 16 (voir la figure 2).

Par ailleurs, à bord de l'avion 1, sont prévues des bornes 17A et 17B sur lesquelles sont respectivement disponibles des signaux électriques respectivement représentatifs de la masse M de l'avion 1 et de la distance d̲ séparant, le long de l'axe longitudinal de roulis R-R de l'avion 1, le centre de gravité G de celui-ci d'une origine O. De tels signaux électriques peuvent provenir de dispositifs d'affichage (non représentés) sur lesquels le pilote affiche les grandeurs M et d̲. Toutefois, le signal sur la borne 17B peut également provenir d'un dispositif de calcul (non représenté) calculant en continu la position du centre de gravité G.

Comme le montre la figure 2, le système conforme à la présente invention comporte :

- un transducteur 18 transformant la position du manche 14 en signal électrique et délivrant à sa sortie un tel signal représentatif d'un paramètre longitudinal commandé, tel que l'assiette commandée Θc désirée par le pilote pour l'avion 1 et commandée par ledit pilote par actionnement correspondant du manche 14. On comprendra que ledit paramètre longitudinal commandé, au lieu d'être l'assiette, pourrait être la pente ou le facteur de charge vertical ;
- un transducteur 19 transformant la position de la manette des gaz 15 en un signal électrique et délivrant à sa sortie un tel signal représentatif de la vitesse commandée Vcc désirée par le pilote pour l'avion 1 et commandée par lui par actionnement correspondant de ladite manette 15 ; et
- un transducteur 20 transformant la position de l'organe 16 de sélection de configurations et délivrant à sa sortie un tel signal représentatif de la configuration actuelle Cf, choisie par le pilote par actionnement correspondant dudit organe 16.

De plus, de façon connue, à bord de l'avion 1 est monté un dispositif 21, par exemple du type ADIRS (Air Data Inertial Reference System) susceptible de délivrer en continu quatre signaux électriques, respectivement représentatifs de l'incidence α, de la vitesse de tangage q̲, de l'assiette longitudinale Θ et de la vitesse Vc instantanées de l'avion 1, ledit dispositif 21 incorporant de plus un radioaltimètre ou analogue susceptible de délivrer en continu un signal électrique représentatif de l'altitude de vol Z.

Ci-après, les différents signaux électriques définis ci-dessus seront désignés par les grandeurs qu'ils représentent respectivement.

Comme on peut le voir sur la figure 2, le système selon l'invention comporte de plus un dispositif de calcul 22 recevant les signaux Θc, Vcc, Cf, M, d̲, Vc et Z et pourvu de deux sorties 22a et 22b. Sur la sortie 22a du dispositif 22 apparaît un signal qui est une combinaison linéaire des signaux Θc et Vcc, du type AΘc + BVcc, expression dans laquelle les coefficients A et B dépendent des signaux Cf, M, d̲, Vc et Z. De même, sur la sortie 22b du dispositif apparaît un signal qui est une combinaison linéaire des signaux Θc et Vcc, du type CΘc + DVcc, expression dans laquelle les coefficients C et D dépendent des signaux Cf, M, d̲, Vc et Z.

On voit que le dispositif de calcul 22 peut comporter une table ou matrice contenant des pluralités d'ensembles de quatre coefficients A, B, C et D, un de ces ensembles particuliers étant choisi en fonction des valeurs instantanées de Cf, M, d̲, Vc et Z. Eventuellement, l'ensemble particulier de quatre coefficients utilisé résulte de l'interpolation, en fonction des cinq valeurs instantanées précitées, entre deux ensembles A, B, C et D emmagasinés dans ladite table ou matrice.

Le signal AΘc + BVcc apparaissant à la sortie 22a du dispositif de calcul 22 est adressé à l'une des entrées d'un additionneur 23, dont l'autre entrée reçoit un signal provenant de la sortie 24a d'un dispositif de calcul 24. Ce dispositif de calcul 24 reçoit les signaux Cf, M, d̲, Z, α, q̲, Θ et Vc et délivre à sa sortie 24a une combinaison linéaire des signaux α, q̲, Θ et Vc, du type aα + bq + cΘ + dVc, expression dans laquelle les coefficients a̲, b̲, c̲ et d̲ dépendent des signaux Cf, M, d̲, Vc et Z. Ainsi, à la sortie de l'additionneur 23 apparaît un signal δq, tel que

(1)      $\delta q = A\Theta c + BVcc + a\alpha + bq + c\Theta + dVc.$

Par ailleurs, le signal CΘc + DVcc apparaissant à la sortie 22b du dispositif de calcul 22 est adressé à l'une des entrées d'un additionneur 25, dont l'autre entrée reçoit un signal provenant d'une autre sortie 24b du dispositif de calcul 24. Celui-ci délivre sur sa sortie 24b une combinaison linéaire des signaux α, q̲, Θ et Vc, du type eα + fq + gΘ + hVc, expression dans laquelle les coefficients e̲, f̲, g̲, et h̲ dépendent des signaux Cf, M, d̲, Vc et Z. Ainsi, à la sortie de l'additionneur 25 apparaît un signal δπ, tel que

(2)      $\delta\pi = C\Theta c + DVcc + e\alpha + fq + g\Theta + hVc.$

On voit que le dispositif de calcul 24 peut comporter une table ou matrice contenant des pluralités d'ensembles de huit coefficients a̲, b̲, c̲, d̲, e̲, f̲, g̲ et h̲, un de ces ensembles particuliers étant choisi en fonction des valeurs de Cf, M, d̲, Vc et Z.

Le signal δq ainsi obtenu, apparaissant à la sortie de l'additionneur 23, est utilisé comme ordre pour la commande en profondeur de l'avion 1. A cet effet, dans le cas où l'empennage horizontal 5 est du type stabilisateur horizontal réglable, le signal δq est adressé à un dispositif de répartition 26, chargé, en fonction des efficacités propres dudit stabilisateur horizontal réglable 5 et des gouvernes de profondeur 12, de répartir ledit signal δq entre le dispositif de commande 27a des gouvernes 12 et le dispositif de commande 27b dudit em-

5

pennage horizontal variable. Bien entendu, dans le cas où l'empennage horizontal 5 est fixe, la totalité du signal δq est adressé aux gouvernes de profondeur 12.

De façon semblable, le signal δπ, calculé de la façon décrite ci-dessus et apparaissant à la sortie de l'additionneur 25, est utilisé comme ordre pour la commande de la poussée des moteurs 6 de l'avion 1. Pour cela, le signal δπ est adressé au dispositif de commande 28 de ceux-ci. Le dispositif de commande 28 est par exemple du type FADEC (Full Authority Digital Engine Control).

Il va de soi que l'action de l'empennage horizontal 5, des gouvernes 12 et des moteurs 6 sous l'action des signaux δq et δπ modifient les valeurs de α, q, Θ et Vc, détectées par le dispositif 21, ce qui, sur la figure 2, est représenté par des flèches en tirets 29,30,31.

Ainsi, si le pilote agit sur le manche 14 pour commander une assiette Θc désirée, l'ordre de commande en profondeur δq prend en compte immédiatement la valeur de cette assiette commandée pour actionner les gouvernes de profondeur 12 et/ou l'empennage horizontal réglable 5. L'avion 1 prend donc cette assiette Θc avec une dynamique déterminée par les retours en incidence α, en vitesse de tangage q et en assiette Θ, déterminés par les termes aα, bq et cΘ de l'expression (1) définie ci-dessus. Simultanément à l'action sur les gouvernes de profondeur 12 et/ou sur l'empennage horizontal réglable 5, l'ordre de commande en poussée δπ tient compte de la valeur de l'assiette Θc commandée grâce au terme CΘc et les retours eα, fq et gΘ de l'expression (2) ajustent en permanence la poussée des moteurs 6 pour que la variation d'assiette se fasse à vitesse constante. De ce fait, dans le cas d'une commande d'assiette, les retours dVc et hVc sur les ordres δq et δπ n'ont aucune influence.

Si, maintenant, le pilote agit sur la manette des gaz 15 pour faire varier la vitesse commandée Vcc, les moteurs 6 sont immédiatement sollicités par l'ordre δπ et il en est de même des gouvernes de profondeur 12 et/ou de l'empennage horizontal réglable 5, à cause du terme BVcc de l'ordre δq. Au fur et à mesure que la vitesse de l'avion 1 varie, les retours dVc et aα sur l'ordre δq modulent le braquage desdites gouvernes de profondeur 12 et/ou de l'empennage horizontal réglable 5 pour maintenir une assiette Θc constante, tandis que les retours eα et hVc sur l'ordre δπ fixent la dynamique de la variation de vitesse de l'avion 1.

Si une rafale de vent longitudinale (frontale ou arrière) se produit, il en résulte une variation de Vc. Grâce aux termes dVc de l'ordre δq et hVc de l'ordre δπ, il apparaîtra une modification compensatrice (en plus ou en moins) de la vitesse et de l'assiette de l'avion 1. Dans ce cas, l'incidence α, la vitesse de tangage q et l'assiette Θ varient peu, de sorte que le confort des passagers est assuré en tout point de l'avion 1.

Si une rafale de vent verticale se produit, il en résulte une variation de l'incidence α. Les termes aα de l'ordre δq et eα de l'ordre δπ permettent alors de maintenir l'assiette longitudinale et de modifier la poussée des moteurs 6 pour rester à vitesse constante.

On donne ci-après quatre exemples de valeurs pour les différents coefficients des quatre combinaisons linéaires pour un avion gros porteur volant en configuration d'atterrissage, train sorti, à l'altitude Z de 5000 pieds.

## Exemple 1

L'avion 1 présente une masse M égale à 52 tonnes et il vole à la vitesse Vc de 130 kts. La distance d représente 10 % de la corde aérodynamique moyenne des ailes 3 et elle est mesurée à partir de la projection orthogonale du bord d'attaque de ladite corde aérodynamique moyenne sur l'axe longitudinal R-R, en direction de la projection orthogonale sur ce dernier du bord de fuite de ladite corde aérodynamique moyenne. Dans ce cas :

```
A = - 0,67      B = + 0,07      C = + 0,82      D = + 1,7
a = - 0,48      b = + 0,38      c = + 0,82      d = - 0,03
e = - 1         f = + 2,4       g = + 3,5       h = - 0,32
```

## Exemple 2

L'avion a une masse M de 63 tonnes ; sa vitesse Vc est de 130 kts et son centrage d (tel que défini dans l'exemple 1) est égal à 38 %. Alors :

```
A = - 0,69      B = + 0,07      C = + 0,86      D = + 1,58
a = - 0,20      b = + 0,46      c = + 0,88      d = - 0,05
e = - 1         f = + 2,3       g = + 3,2       h = - 0,30
```

Exemple 3

L'avion a une masse M de 63 tonnes ; sa vitesse est de 110 kts et son centrage d (tel que défini ci-dessus) est égal à 38 %. Dans ce cas :

```
A = - 0,83      B = + 0,12      C = + 0,59      D = + 1,52
a = - 0,02      b = + 0,7       c = + 1,10      d = - 0,11
e = - 1         f = + 2,10      g = + 3,0       h = + 0,02
```

Exemple 4

L'avion a une masse M de 52 tonnes ; sa vitesse Vc est de 170 kts et son centrage d (tel que défini ci-dessus) est égal à 25 %. Alors :

```
A = - 0,72      B = + 0,04      C = + 0,29      D = + 1,52
a = - 0,3       b = + 0,35      c = + 0,81      d = - 0,03
e = - 0,82      f = + 0,97      g = + 3,1       h = - 0,53
```

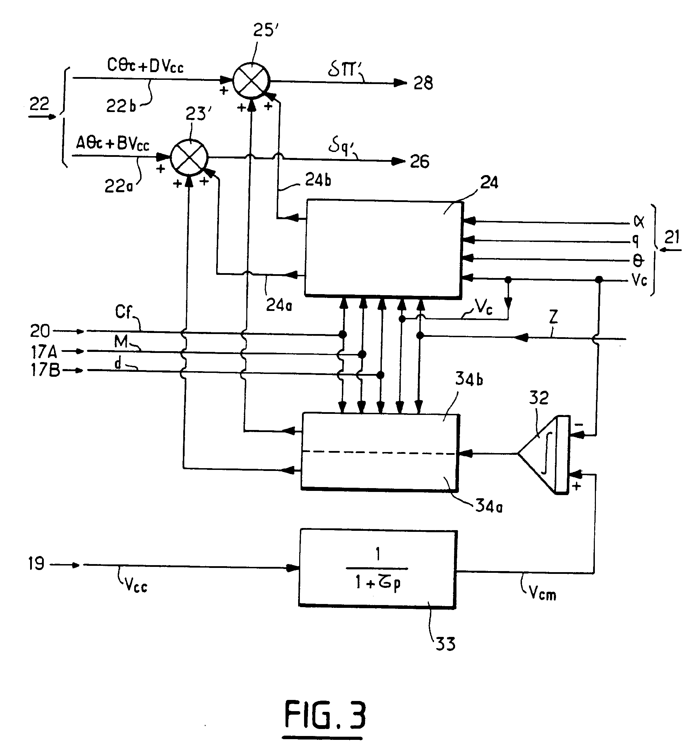

Sur le schéma synoptique de la figure 3, on retrouve le dispositif de calcul 24, avec ses entrées recevant respectivement les signaux Cf, M et d du transducteur 20 et des bornes 17A et 17B et ses entrées recevant les signaux $\alpha$, q, $\Theta$, Vc et Z du dispositif 21. Les sorties 24a et 24b du dispositif de calcul 24 sont respectivement reliées à une entrée d'additionneurs 23' et 25' à trois entrées, remplaçant les additionneurs 23 et 25 décrits ci-dessus. Une autre entrée desdits additionneurs 23' et 25' reçoit, comme précédemment, la première ou la seconde combinaison linéaire A$\Theta$c + BVcc et C$\Theta$c + DVcc, respectivement.

Par ailleurs, le système de la figure 3 comporte un comparateur-intégrateur 32, dont l'entrée négative est alimentée par le signal Vc à partir du dispositif 21 et dont l'entrée positive reçoit, du transducteur 19, le signal de vitesse commandée Vcc, à travers un filtre 33. Le filtre 33 présente une fonction du type 1/1 + $\tau$p, de sorte que le signal filtré Vcm appliqué à l'entrée positive du comparateur-intégrateur 32 est Vcm = 1/(1 + $\tau$ p) .Vcc.

La sortie du comparateur-intégrateur 32 est reliée à un double amplificateur 34a,34b. La sortie de l'amplificateur 34a est reliée à la troisième entrée de l'additionneur 23' et celle de l'amplificateur 34b est reliée à la troisième entrée de l'additionneur 25'. Le double amplificateur 34a,34b reçoit les signaux Cf, M, d, Vc et Z et le gain g1,g2 de chaque amplificateur 34a ou 34b est une fonction desdits signaux Cf, M, d, Vc et Z.

Ainsi, à la sortie de l'amplificateur 34a apparaît le signal

$$g1 . \int (Vcm - Vc),$$

tandis qu'à la sortie de l'amplificateur 34b apparaît le signal

$$g2 . \int (Vcm - Vc).$$

Il en résulte que, à la sortie de l'additionneur 23', on obtient un signal de commande en profondeur $\delta$q' égal à

$$\delta q' = A\Theta c + BVcc + a\alpha + bq + c\Theta + dVc + g1.\int (Vcm - Vc)$$

tandis que, à la sortie de l'additionneur 25', on obtient un signal de commande en poussée $\delta\pi$ égal à

$$\delta\pi' = C\Theta c + DVcc + e\alpha + fq + g\Theta + hVc + g2.\int (Vcm - Vc).$$

Grâce au dernier terme intégral desdits signaux de commande en profondeur et en poussée, on est sûr que, en régime stabilisé, la vitesse Vc sera égale à la vitesse commandée Vcc.

Dans les exemples donnés ci-dessus des différents coefficients des combinaisons linéaires, les valeurs des gains g1 et g2 sont les suivantes :

| | | |
|---|---|---|
| g1 = 0,001 | et | g2 = 0,03 (exemple 1) |
| g1 = 0,001 | et | g2 = 0,02 (exemple 2) |
| g1 = 0,0022 | et | g2 = 0,027 (exemple 3) |
| g1 = 0,0008 | et | g2 = 0,028 (exemple 4). |

**Revendications**

1. Système de commande en profondeur et en poussée d'un aéronef (1) comportant :
   - des premières surfaces aérodynamiques de profondeur (5,12) actionnées à partir d'un premier organe d'actionnement (14) associé à un premier transducteur (18) délivrant un premier signal électrique représentatif d'un paramètre longitudinal commandé (Θc) ;
   - au moins un moteur (6) commandé à partir d'un second organe d'actionnement (15) associé à un second transducteur (19) délivrant un second signal électrique représentatif d'une vitesse commandée (Vcc) pour ledit aéronef ;
   - une pluralité de secondes surfaces aérodynamiques (7,8,9,10) pouvant prendre, en fonction de chaque phase de vol de l'aéronef, des positions relatives différentes définissant des configurations aérodynamiques particulières, le choix de l'une ou l'autre desdites configurations aérodynamiques étant obtenu grâce à l'actionnement d'un troisième organe d'actionnement (16) associé à un troisième transducteur (20) délivrant un troisième signal électrique représentatif de la configuration (Cf) choisie ;
   - des moyens (17A) susceptibles de délivrer un quatrième signal électrique représentatif de la masse (M) dudit aéronef (1) ;
   - des moyens (17B) susceptibles de délivrer un cinquième signal électrique représentatif de la distance (d), le long de l'axe longitudinal (R-R) dudit aéronef, séparant le centre de gravité (G) dudit aéronef d'une origine (O) ; et
   - des moyens (21) susceptibles de délivrer des sixième, septième, huitième, neuvième et dixième signaux électriques, respectivement représentatifs de l'altitude de vol (Z), de l'incidence aérodynamique (α), de la vitesse de tangage (q), de l'assiette longitudinale (Θ) et de la vitesse (Vc) instantanées dudit aéronef,
   caractérisé en ce qu'il comporte :
   - un premier dispositif de calcul (22) recevant lesdits premier à sixième signaux électriques, ainsi que ledit dixième signal électrique et élaborant une première et une seconde combinaison linéaire (AΘc + BVcc ; CΘc + DVcc) desdits premier (Θc) et second (Vcc) signaux électriques, les coefficients (A,B et C,D) attribués respectivement auxdits premier et second signaux électriques dans ladite première et ladite seconde combinaison linéaire dépendant desdits troisième à sixième et dixième signaux électriques ;
   - un second dispositif de calcul (24) recevant lesdits troisième à dixième signaux électriques et élaborant une troisième et une quatrième combinaison linéaire (aα + bq + cΘ + dVc ; eα + fq + gΘ + hVc) desdits septième à dixième signaux électriques, les coefficients (a,b,c,d ; e,f,g,h) attribués respectivement auxdits septième à dixième signaux électriques dans ladite troisième et ladite quatrième combinaison linéaire dépendant desdits troisième à sixième et dixième signaux électriques ;
   - des premiers moyens additionneurs (23) recevant lesdites première et troisième combinaisons linéaires et les additionnant pour former un premier ordre électrique de commande en profondeur ($\delta q$) adressé auxdites premières surfaces aérodynamiques (5,12) ; et

- des seconds moyens additionneurs (25) recevant lesdites seconde et quatrième combinaisons linéaires et les additionnant pour former un second ordre électrique de commande en poussée ($\delta\pi$) adressé audit moteur (6).

2. Système de commande selon la revendication 1,
caractérisé en ce que ledit premier dispositif de calcul (22) incorpore une première mémoire contenant une pluralité d'ensembles de quatre coefficients (A,B,C,D) pour lesdites première et seconde combinaisons linéaires (A$\Theta$c + BVcc ; C$\Theta$c + DVcc), le choix d'un tel ensemble de quatre coefficients parmi les autres dépendant desdits troisième à sixième et dixième signaux électriques (Cf, M, d, Z et Vc).

3. Système de commande selon l'une des revendications 1 ou 2,
caractérisé en ce que ledit second dispositif de calcul (24) incorpore une seconde mémoire contenant une pluralité d'ensembles de huit coefficients (a,b,c,d,e,f,g et h) pour lesdites troisième et quatrième combinaisons linéaires (a$\alpha$ + bq + c$\Theta$ + dVc ; e$\alpha$ + fq + g$\Theta$ + hVc), le choix d'un tel ensemble de huit coefficients parmi les autres dépendant desdits troisième à sixième et dixième signaux électriques (Cf, M, d, Z et Vc).

4. Système de commande selon l'une quelconque des revendications 1 à 3,
caractérisé en ce qu'il comporte de plus :
- des moyens (32) pour former et intégrer la différence entre lesdits second et dixième signaux électriques ;
- des premiers moyens amplificateurs (34a) pour amplifier ladite différence intégrée provenant desdits moyens de soustraction et d'intégration (32), le gain desdits premiers moyens amplificateurs étant une fonction desdits troisième à sixième et dixième signaux électriques ;
- des troisièmes moyens additionneurs (23′) pour additionner audit premier ordre électrique de commande en profondeur ($\delta q$) ladite différence intégrée et amplifiée provenant desdits premiers moyens amplificateurs (34a) ;
- des seconds moyens amplificateurs (34b) pour amplifier ladite différence intégrée provenant desdits moyens de soustraction et d'intégration (32), le gain desdits seconds moyens amplificateurs étant une fonction desdits troisième à sixième et dixième signaux électriques ; et
- des quatrièmes moyens additionneurs (25′) pour additionner audit second ordre électrique de commande en poussée ($\delta\pi$) ladite différence intégrée et amplifiée provenant desdits seconds moyens amplificateurs (34b).

5. Système selon la revendication 4,
caractérisé en ce qu'il comporte un filtre (33) de fonction 1/1 + $\tau$p à travers lequel ledit second signal électrique est appliqué auxdits moyens de soustraction et d'intégration (32).

6. Système selon l'une quelconque des revendications 1 à 5, pour un aéronef dans lequel lesdites premières surfaces aérodynamiques de profondeur comportent des gouvernes de profondeur (12) et un plan horizontal réglable (5),
caractérisé en ce qu'il comporte un dispositif (26) répartissant ledit premier ordre électrique de commande en profondeur ($\delta q$) entre lesdites gouvernes de profondeur (12) d'une part, et ledit plan horizontal réglable (5), d'autre part.

**Patentansprüche**

1. Höhen- und Schubsteuersystem für ein Luftfahrzeug (1) mit:
- ersten aerodynamischen Flächen zur Höhensteuerung (5,12), die durch ein erstes Betätigungsorgan (14) betätigt werden, das mit einem ersten Wandler (18) verbunden ist, der ein erstes, für einen gesteuerten Längsparameter ($\Theta$c) repräsentatives elektrisches Signal abgibt;
- mindestens einem Motor (6), der durch ein zweites Betätigungsorgan (15) gesteuert wird, das mit einem zweiten Wandler (19) verbunden ist, der ein zweites, für eine gesteuerte Geschwindigkeit (Vcc) des Luftfahrzeugs repräsentatives elektrisches Signal abgibt;
- einer Vielzahl zweiter aerodynamischer Flächen (7,8,9,10), die entsprechend jeder Flugphase des Luftfahrzeugs unterschiedliche Stellungen zueinander einnehmen können, die besondere aerodynamische Konfigurationen darstellen, wobei die Wahl der einen oder anderen aerodynamischen Konfiguration durch Betätigung eines dritten Betätigungsorgans (16) erfolgt, das mit einem dritten Wandler (20) verbunden ist, der ein drittes, für die gewählte Konfiguration (Cf) repräsentatives elektrisches Signal abgibt;

- Mitteln (17A), die ein viertes, für die Masse (M) des Luftfahrzeugs (1) repräsentatives elektrisches Signal abgeben können;
- Mitteln (17B), die ein fünftes, für den Abstand (d) zwischen dem Schwerpunkt (G) des Luftfahrzeugs und einem Nullpunkt (O) entlang der Längsachse (R-R) des Luftfahrzeugs repräsentatives elektrisches Signal abgeben können; und
- Mitteln (21), die ein sechstes, siebentes, achtes, neuntes und zehntes elektrisches Signal abgeben können, das jeweils für den augenblicklichen Wert von Flughöhe (Z), aerodynamischem Anstellwinkel ($\alpha$), Nickgeschwindigkeit (q), Trimmwinkel ($\Theta$) und Geschwindigkeit (Vc) des Luftfahrzeugs repräsentativ ist,

dadurch gekennzeichnet, daß es umfaßt:

- eine erste Rechenvorrichtung (22) für das erste bis sechste elektrische Signal sowie das zehnte elektrische Signal, die eine erste und eine zweite lineare Verknüpfung (A$\Theta$c + BVcc; C$\Theta$c + DVcc) des ersten ($\Theta$c) und zweiten (Vcc) elektrischen Signals herstellt, wobei die Koeffizienten (A,B und C,D), die dem ersten bzw. zweiten elektrischen Signal in der ersten und zweiten linearen Verknüpfung zugeordnet sind, vom dritten bis sechsten und zehnten elektrischen Signal abhängig sind;
- eine zweite Rechenvorrichtung (24) für das dritte bis zehnte elektrische Signal, die eine dritte und eine vierte lineare Verknüpfung (a$\alpha$ + bq + c$\Theta$ + dVc; e$\alpha$ + fq + g$\Theta$ + hVc) des siebenten bis zehnten elektrischen Signals herstellt, wobei die Koeffizienten (a,b,c,d; e,f,g,h), die jeweils dem siebenten bis zehnten elektrischen Signal in der dritten und in der vierten linearen Verknüpfung zugeordnet sind, vom dritten bis sechsten und zehnten elektrischen Signal abhängig sind;
- erste Addiermittel (23) für die erste und dritte lineare Verknüpfung zu deren Addition zwecks Bildung eines ersten elektrischen Höhensteuerbefehls ($\delta$q) für die ersten aerodynamischen Flächen (5,12); und
- zweite Addiermittel (25) für die zweite und vierte lineare Verknüpfung zu deren Addition zwecks Bildung eines zweiten elektrischen Schubsteuerbefehls ($\delta\pi$) für den Motor (6).

2. Steuersystem nach Anspuch 1,
dadurch gekennzeichnet, daß die erste Rechenvorrichtung (22) einen ersten Speicher mit einer Vielzahl von Mengen aus vier Koeffizienten (A,B,C,D) für die erste und zweite lineare Verknüpfung (A$\Theta$c + BVcc; C$\Theta$c + DVcc) enthält, wobei die Wahl einer solchen Menge von vier Koeffizienten aus den anderen Mengen vom dritten bis sechsten und zehnten elektrischen Signal (Cf, M, d, Z und Vc) abhängig ist.

3. Steuersystem nach einem der Ansprüche 1 oder 2,
dadurch gekennzeichnet, daß die zweite Rechenvorrichtung (24) einen zweiten Speicher mit einer Vielzahl von Mengen aus acht Koeffizienten (a,b,c,d,e,f,g und h) für die dritte und vierte lineare Verknüpfung (a$\alpha$ + bq + c$\Theta$ + dVc; e$\alpha$ + fq + g$\Theta$ + hVc) enthält, wobei die Wahl einer solchen Menge von acht Koeffizienten aus den anderen Mengen vom dritten bis sechsten und zehnten elektrischen Signal (Cf, M, d, Z und Vc) abhängig ist.

4. Steuersystem nach einem der Ansprüche 1 bis 3,
dadurch gekennzeichnet, daß es außerdem umfaßt:
- Mittel (32) zur Bildung und Integration der Differenz zwischen dem zweiten und zehnten elektrischen Signal;
- erste Mittel (34a) zur Verstärkung der integrierten Differenz aus den Subtraktions- und Integrationsmitteln (32), wobei die Verstärkung der ersten Verstärkungsmittel eine Funktion des dritten bis sechsten und zehnten elektrischen Signals ist;
- dritte Mittel (23') zur Addition des ersten elektrischen Höhensteuerbefehls ($\delta$q) und der integrierten und verstärkten Differenz aus den ersten Verstärkungsmitteln (34a);
- zweite Mittel (34b) zur Verstärkung der integrierten Differenz aus den Subtraktions- und Integrationsmitteln (32), wobei die Verstärkung der zweiten Verstärkungsmittel eine Funktion des dritten bis sechsten und zehnten elektrischen Signals ist; und
- vierten Mitteln (25') zur Addition des zweiten elektrischen Schubsteuerbefehls ($\delta\pi$) und der integrierten und verstärkten Differenz aus den zweiten Verstärkungsmitteln (34b).

**5.** System nach Anspruch 4,
dadurch gekennzeichnet, daß es einen Filter (33) mit der Funktion $1/1 + \tau p$ hat, über den das zweite elektrische Signal den Subtraktions- und Integrationsmitteln (32) aufgegeben wird.

**6.** System nach einem der Ansprüche 1 bis 5, für ein Luftfahrzeug, dessen erste aerodynamische Flächen zur Höhensteuerung Höhenruder (12) und eine verstellbare Höhenflosse (5) haben,
dadurch gekennzeichnet, daß es eine Vorrichtung (26) umfaßt, die das erste elektrische Höhensteuersignal ($\delta q$) zwischen den Höhenrudern (12) einerseits und der verstellbaren Höhenflosse (5) andererseits verteilt.

**Claims**

**1.** A pitch and thrust control system for an aircraft (1) comprising:

first airfoils for pitch control (5, 12) actuated from a first actuator member (14) associated with a first transducer (18) delivering a first electrical signal representative of a first longitudinal parameter setting ($\theta c$);

at least one engine (6) controlled from a second actuator member (15) associated with a second transducer (19) delivering a second electrical signal representative of a speed setting (Vcc) for said aircraft;

a plurality of second airfoils (7, 8, 9, 10) capable of taking up different relative positions as a function of each stage of flight of the aircraft, defining particular aerodynamic configurations, with one or other of said aerodynamic configurations being selected by actuating a third actuator member (16) associated with a third transducer (20) delivering a third electrical signal representative of the selected configuration (Cf);

means (17A) suitable for delivering a fourth electrical signal representative of the mass (M) of said aircraft (1);

means (17B) suitable for delivering a fifth electrical signal representative of the distance ($\underline{d}$) along the longitudinal axis (R-R) of said aircraft between the center of gravity (G) of said aircraft and an origin (O); and

means (21) suitable for delivering sixth, seventh, eighth, ninth, and tenth electrical signals respectively representative of the instantaneous flight altitude (Z), aerodynamic angle of incidence ($\alpha$), pitching rate ($\underline{q}$), longitudinal trim ($\theta$), and speed (Vc) of said aircraft,

the system being characterized in that it includes:

a first calculation device (22) receiving said first to sixth electrical signals, together with said tenth electrical signal and delivering first and second linear combinations ($A\theta c + BVcc$; $C\theta c + DVcc$) of said first and second electrical signals ($\theta c$; Vcc), with the coefficients (A, B and C, D) given to said first and second electrical signals respectively in said first and second linear combinations depending on said third to sixth and tenth electrical signals;

a second calculation device (24) receiving said third to tenth electrical signals and generating third and fourth linear combinations ($a\alpha + bq + c\theta + dVc$; $e\alpha + fq + g\theta + hVc$) of said seventh to tenth electrical signals, the coefficients (a, b, c, d; e, f, g, h) given to said seventh to tenth electrical signals respectively in said third and fourth linear combinations depending on said third to sixth and tenth electrical signals;

first adder means (23) receiving said first and third linear combinations and adding them to form a pitch first electrical command ($\delta q$) applied to said first airfoils (5, 12); and

second adder means (25) receiving said second and fourth linear combinations and adding them to form a thrust second electrical command ($\delta\pi$) applied to said engine (6).

**2.** A control system according to claim 1, characterized in that said first calculation device (22) incorporates a first memory containing a plurality of sets of four coefficients (A, B, C, D) for said first and second linear combinations ($A\theta c + BVcc$; $C\theta c + DVcc$), a particular one of said sets of four coefficients being selected from amongst the others as a function of said third to sixth and tenth electrical signals (Cf, M, $\underline{d}$, Z, and Vc).

**3.** A control system according to claim 1 or 2, characterized in that said second calculation device (24) incorporates a second memory containing a plurality of sets of eight coefficients (a, b, c, d, e, f, g, and h) for said third and fourth linear combinations ($a\alpha + bq + c\theta + dVc$; $e\alpha + fq + g\theta + hVc$), a particular one of said sets of eight coefficients being selected from amongst the others as a function of said third to sixth and tenth electrical signals (Cf, M, $\underline{d}$, Z, and Vc).

4. A control system according to any one of claims 1 to 3, characterized in that it further includes:

subtractor and integrator means (32) for taking the difference between said second and tenth electrical signals, and integrating it;

first amplifier means (34a) for amplifying said integrated difference from said subtractor and integrator means (32), the gain of said first amplifier means being a function of said third to sixth and tenth electrical signals;

third adder means (23') for adding said integrated and amplified difference from said first amplifier means (34a) to said pitch first electrical command ($\delta$q);

second amplifier means (34b) for amplifying said integrated difference from said subtractor and integrator means (32), the gain of said second amplifier means being a function of said third to sixth and tenth electrical signals; and

fourth adder means (25') for adding said integrated and amplified difference from said second amplifier means (34b) to said thrust second electrical command ($\delta\pi$).

5. A system according to claim 4, characterized in that it includes a filter (33) having a $1/(1 + \tau p)$ function, via which said second electrical signal is applied to said subtractor and integrator means (32).

6. A system according to any one of claims 1 to 5, for an aircraft in which said first airfoils for pitch control comprise pitch control surfaces (12) and an adjustable horizontal plane (5), the system being characterized in that it includes a device (26) for distributing said pitch first electrical command ($\delta$q) between said pitch control surfaces (12) and said adjustable horizontal plane (5).

FIG.1

FIG. 2

EP 0 465 352 B1

$$\underline{\text{FIG. 3}}$$